Europäisches Patentamt

European Patent Office

Office européen des brevets

(19)

(11) EP 0 344 807 B1

(12)

# EUROPEAN PATENT SPECIFICATION

(45) Date of publication and mention
of the grant of the patent:
**03.09.1997 Bulletin 1997/36**

(51) Int Cl.6: **G01N 15/08**, G01N 21/76

(21) Application number: **89110053.9**

(22) Date of filing: **02.06.1989**

(54) **Method for evaluating the permeability of a thin membrane**

Verfahren zur Bestimmung der Permeabilität einer dünnen Membran

Procédé pour évaluer la perméabilité d'une membrane mince

(84) Designated Contracting States:
**DE FR GB**

(30) Priority: **03.06.1988 JP 138108/88**

(43) Date of publication of application:
**06.12.1989 Bulletin 1989/49**

(73) Proprietor: **HAMAMATSU PHOTONICS K.K.**
**Shizuoka-ken (JP)**

(72) Inventors:
• **Muraki, Hiroji c/o HAMAMATSU PHOTONICS**
**Hamamatsu-shi Shizuoka (JP)**
• **Ito, Toshiaki c/o HAMAMATSU PHOTONICS**
**Hamamatsu-shi Shizuoka (JP)**
• **Hiramatsu, Mitsuo**
**c/o HAMAMATSU PHOTONICS**
**Hamamatsu-shi Shizuoka (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**US-A- 4 540 548**          **US-A- 4 659 674**

• **ANALYTICAL LETTERS, vol. 20, no. 2, 1987,**
**pages 317-326; L.J. BLUM et al.:**
**"Chemiluminescent analyte microdetection**
**based on the luminol-H2O2 reaction using**
**peroxidase immobilized on new synthetic**
**membranes"**
• **PISARZHEVSKII INSTITUTE OF PHYSICAL**
**CHEMISTRY, ACADEMY OF SCIENCES OF THE**
**UKRAINIAN SSR, vol. 43, no. 8, August 1977,**
**pages 1045-1047; K.B. YATSIMIRSKII et al.:**
**"Control of seal tightness by means of kinetic**
**methods of analysis"**
• **ANALYTICAL CHEMISTRY, vol. 51, no. 3, March**
**1979, pages 424-428; V. NAU et al.: "Application**
**of microporous membranes to**
**chemiluminescence analysis"**
• **CLINICAL CHEMISTRY, vol. 25, no. 4, 1979,**
**pages 512-519; F. GORUS et al.: "Applications of**
**bio- and chemiluminescence in the clinical**
**laboratory"**
• **ANAL. CHEM., vol. 54, no. 11, September 1982,**
**pages 1698-1701; D. PILOSOF et al.:**
**"Microporous membrane flow cell with**
**nonimmobilized enzyme for chemiluminescent**
**determination of glucose"**
• **PATENT ABSTRACTS OF JAPAN, vol. 9, no. 141**
**(P-364)[1864], 15th June 1985; & JP- A-60 20 135**
**(DAICEL) 01-02-1985**

EP 0 344 807 B1

## Description

### BACKGROUND OF THE INVENTION

#### Field of the Invention

The present invention relates to a method of evaluating the permeability of a thin membrane, and more particularly, it relates to a method of evaluating the permeation of substances through thin membranes and the walls of microcapsules in the chemical and pharmaceutical industries.

#### Description of the Related Art

Controlling the permeation of substances through thin membranes and the walls of microcapsules is one of the basic techniques that have been adopted in the chemical and pharmaceutical industries. Designing a thin membranes or microcapsule, and designing optimum thin membranes or microcapsules suitable for a specific purpose is an essential prerequisite for the practical application of this technique.

The permeability of thin membranes can be evaluated by several methods including analysis by gas chromatography, volumetric measurement of a permeant gas, and gravimetric measurement of a desiccant whose weight will change with absorption of the permeant moisture. Another method may be adopted in which a dye is allowed to permeate through a thin membrane and then measuring the resulting change in the light absorbance of the dye, or in the intensity of fluorescence is measured, or in which an electrolyte is allowed to permeate through the membrane and the small amount of permeation is measured in terms of the change in electrical conductivity caused by permeation of the electrolyte.

These prior art methods, however, have a common problem in that they are all designed to determine the total amount of permeation within a certain period of time, and therefore are incapable of evaluating the permeability of a thin membrane at very small time intervals. In addition, for example the minimum concentration of a substance that can be detected is on the order of $10^{-9}$ mole/$\ell$ in the measurement of light absorbance. Moreover, these methods require a considerably long time to detect the time-dependent change in an extremely small amount of permeant.

Under these circumstances, the present inventors previously proposed a method of measuring a very small amount of permeant by utilizing chemiluminescence (Japanese Patent Application No. 280497/86, now Japanese Unexamined Publication No. 63-133039). In this method, two dissimilar substances are juxtaposed across a thin membrane and one substance is allowed to diffuse and permeate through the membrane until it mixes with the other substance and the resulting luminescence is measured with a photodetector to thereby evaluate the permeability of the membrane to the first substance. This method, which utilizes chemiluminescence, is capable of more sensitive detection of the permeant than the other methods and has the added advantage of enabling real-time measurement of the time-dependent change in the amount of permeation and two-dimensional observation. However, the combinations of substances that can be mixed with each other to produce chemiluminescence are limited to hydrogen peroxide/luminol, adenosine triphosphate (ATP), luciferase, and a few other examples. This restriction of the substances for chemiluminescence has made it impossible to evaluate the permeability of a thin membrane for many other kinds of substances.

### SUMMARY OF THE INVENTION

It is an object of the present invention to provide a method that is capable of evaluating the permeability of a thin membrane for various kinds of substances with high sensitivity and at a fast rate.

Additional objects and advantages of the invention will be set forth in the description, or may be learned by practice of the invention. The objects and advantages of the invention may be realized and obtained by means of the instrumentalities and combinations particularly pointed out in the appended claims.

To achieve the foregoing objects, and in accordance with the present invention, a solution comprising a first substance and a solution comprising a mixture of a chemiluminescent substance and a second substance that reacts with the first substance , with the resulting reaction product further reacting with the chemiluminescent substance , are juxtaposed across a thin membrane. The first substance is allowed to diffuse and permeate through the thin membrane until it contacts the mixture solution comprising the second substance and the chemiluminescent substance. The first substance reacts with the second substance, and that reaction product then reacts with the chemiluminescent substance to produce chemiluminescence. The light emitted is measured by photodetector.

In the second method of evaluating the permeability of a thin membrane in accordance with the present invention, a solution comprising a first substance that catalyzes chemiluminescence and a solution containing a chemiluminescent substance that produces chemiluminescence in the presence of said castalyst are juxtaposed across the thin membrane to be evaluated. The first substance diffuses and permeates through the thin membrane to react with the solution containing a chemiluminescent substance and the resulting chemiluminescence is measured with a photodetector.

In the third method of evaluating the permeability of a thin membrane in accordance with the present invention, a solution comprising a fluorescent substance and a solution comprising a plurality of reactive substances that produce an excited intermediate capable of transferring energy to the fluorescent substance are juxtaposed across the thin membrane to be evaluated. The fluorescent substance diffuses and permeates through the thin membrane, and the emission of light produced by the combination of the chemiluminescent reaction and the energy transfer is measured with a photodetector.

BRIEF DESCRIPTION OF THE DRAWINGS

The accompanying drawings, which are incorporated in and constitute a part of the specification, illustrate a presently preferred embodiment of the invention and, together with the general description given above and the detailed description of the preferred embodiment given below, serve to explain the principles of the invention.

Fig. 1 depicts an apparatus for measuring the permeability of a thin membrane by a method of the present invention;
Fig. 2 depicts an apparatus for measuring the permeability of the skin of a microcapsule by a method of the present invention;
Fig. 3 depicts the chemiluminescence intensity profile with time lapse in an example of the present invention; and
Fig. 4 depicts the time-dependent change in the integration of the values of chemiluminescence intensity of the example of Fig. 3.

DESCRIPTION OF THE PREFERRED EMBODIMENT

When the first substance is glucose, glucose oxidase is preferably used as the first catalyst. Several preferred combinations of the first substance and the first catalyst are listed below:

cholesterol/cholesterol oxidase;
cholesterol ester/cholesterol ester hydrase or cholesterol ester oxidase;
neutral fat/lipase and glycerol oxidase
phospholipid/phospholipase D and choline oxidase;
free fatty acid/acyl-CoA synthetase and acyl-CoA oxidase;
Urea/Urease, glutamate dehydrogenase and glutamate oxidase;
ammonia/glutamate dehydrogenase and glutamate oxidase;
uric acid/uricase;
creatine/creatininase, creatinase and sarcosine oxidase;
lactic acid/lactate oxidase
butyric acid/butyrate oxidase;
pyruvic acid/pyruvate oxidase;
amino acid/amino acid oxidase; and
inorganic phosphorus/pyruvato oxidase.

Each precursor of the first substance, for example, starch in the case of glucose, can also be used and the permeability of a membrane by that precursor can, of course, be evaluated by the method of the present invention.

The substances listed above are employed in aqueous solution and the second substance, which reacts with the first substance in the presence of the first catalyst, is dissolved oxygen in the aqueous solution. Any substances can be used as the first and second substances as long as they react with each other to generate hydrogen peroxide, and the combinations that can be employed in the present invention are not limited to those listed above.

If the reaction product is hydrogen peroxide, a chemiluminescent substance that emits light upon reaction with hydrogen peroxide is also used. For example, luminol, lucigenin or lophine is used as a chemiluminescent substance. As the second catalyst, peroxidase, $Co^{2+}$, $Co^{3+}$, $Fe^{(CN)}_6{}^{3-}$, $SbCl_6{}^-$, $Fe^{2+}$, $Cu^{2+}$, hemin, Cu $(NO_3)_2$, $CuCl_2$, salt of $Co^{2+}$ or the like is used. Thus, the first catalyst catalyzes the oxidation reaction of the first substance, which is oxidized to generate hydrogen peroxide, and the second catalyst catalyzes the reaction between the chimiluminescent substance and the so generated hydrogen peroxide to produce luminescence.

The first and second substances may be such that they react to generate adenosine triphosphate, (ATP). In this case, the first substance is creatinic acid, phosphenol pyruvate kinase, etc., and the second substance is creatine kinase/adenosine diphosphate (ADP), pyruvate kinase/ADP, etc. Luciferin, etc, are used as a chemiluminescent substance which emits light upon reaction with ATP.

Various thin membranes can be evaluated for their permeability, including packaging films, reverse osmotic membranes, dialysis membranes, ultrafiltration membranes, microfiltration membranes, etc. These membranes may be made of polyethylene, polyvinyl alcohol, cellulose acetate, regenerated cellulose, and various types of polymer alloys. The shape of thin membranes is not limited in any particular way, but they may be the skins of microcapsules, laminates, tubes, hollow fibers, etc.

The method of the present invention for evaluating the permeability of a thin membrane by detecting chemiluminescence has been described above primarily with reference to the permeation of substances that are capable of inducing the generation of hydrogen peroxide. It should be noted, however, that the method of the present invention is also applicable to the measurement of permeability for the following substances.

(1) Substances Catalyzing Chemiluminescent Reaction

In this case, chemiluminescence, although slight in amount, will generally be produced even in the absence of a catalyst to increase the background emission level. Such slight amount, however, is almost negligible for the purpose of evaluating the permeability of a thin membrane by trace metal ions. Examples of chemiluminescent substances that can be used in this instance are solutions in which aqueous hydrogen peroxide is mixed with luminol, lucigenin, lophine, 1, 10-phenanthroline, siloxene, etc. Catalysts whose permeation through the thin membrane can be measured are metal ions such as $Fe^{2+}$, $Cr^{3+}$, $Co^{2+}$, $C_u^{2+}$, $Mn^{2+}$, $Cd^{2+}$, $Zn^{2+}$, etc.

(2) Fluorescent Substances

The key factor is the steady-state formation of an excited intermediate. With a highly viscous solvent system such as a glycerin solvent being selected, the reactants will react slowly to form an excited intermediate. The quantitative analysis is not as satisfactory as in the case of other chemiluminescent systems (e.g. light emission from the above substances (1) and luminol) but the advantage of this system lies in the extreme breadth of the range of permeants since luminescence can be produced from many kinds of fluorescent substances.

Examples of the fluorescent substances include anthracene, pyrene, rhodamine B, uric acid, catecholamines, folic acid, thyroxine quinones, etc., and a plurality of reactive substasnces that generate an excited intermediate capable of transferring energy to the fluorescent substance may be exampflified by a mixture of hydrogen peroxide and an oxalic diester such as bis (2,4-dinitrophenyl) oxalate or bis (2,4,6-tricholorophenyl) oxalate.

The light emitted by the reactions described above is measured with a photodetector such as a photomultiplier tube, an image intensifier, an infrared sensor or a one-dimensional sensor.

The present invention provides a first substance, which diffuses and permeates through a thin membrane under test and contacts the second substance in a mixture with the chemiluminescent substance, thereby forming the reaction product such as hydrogen peroxide. This reaction product further reacts with the chemiluminescent substance in the mixture to produce chemiluminescence. Similar chemiluminescence can be produced even when a chemiluminescence catalyzing substance is selected as the first substance, which diffuses and permeates through the membrane to make contact with a substance that produces chemiluminescence with the aid of the first substance catalyst. When a fluorescent substance is selected as the first substance, it diffuses and permeates through the membrane until it contacts a plurality of reactive substances that generate an excited intermediate capable of transferring energy to the fluorescent substance. This system is also capable of producing luminescence.

The quantity of emitted light is correlated to the amount of first substance that permeates through the thin membrane. The time-dependent change in light emission can be measured by a photon-counting method using a photomultiplier tube, an image intensifier, an infrared sensor, or a one-dimensional sensor. The results of measurement provides a basis for estimating a very small change in the trace amount of permeant. In addition, varying the combination of the first and second substances will enable the permeability of the membrane to be evaluated for many kinds of substances. Several examples of the present invention are described hereinafter with reference to the accompanying drawings.

Example 1

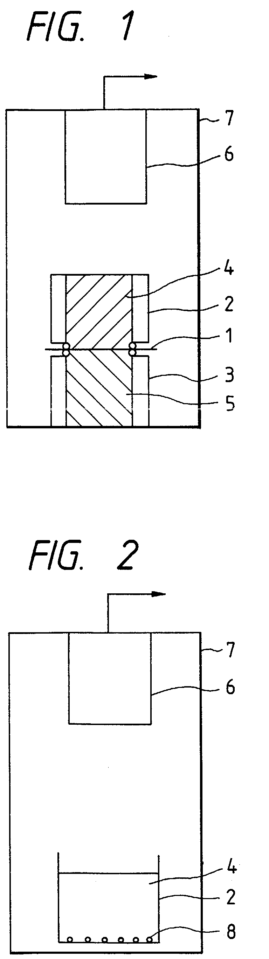

Fig. 1 is a sketch of an apparatus for measuring the permeability of a thin membrane by the method of the present invention. The apparatus comprises the membrane under test 1, cells 2 and 3, which are respectively charged with solutions 4 and 5 of the first substance and the mixture containing the second substance and the chemiluminescent substance, a photodetector 6 and a dark box 7.

The solution of the first substance was a 0.01 % aqueous solution of glucose, and the solution of the mixture was an aqueous solution having a mixture of glucose oxidase (1 mg), luminol (2 mg) and peroxidase (1 mg) contained in 10 cc of a 0.1 M phosphate buffered (pH 7) solution. The thin membrane under test was a commercial cellulose dialysis membrane (fractionation mol. wt. 1,500) having a thickness of 35 μm.

The cell 2 containing the solution of first substance 4 and the cell 3 completely filled with the aqueous solution of mixture 5 were placed carefully in the dark box 7 in such a way that the open bottom of the cell 2 would face the open top of the cell 3 through the thin membrane 1. After placing the photodetector 6 above the cell 2, the dark box was totally isolated from outside light.

The glucose in the cell 2 permeated, through the membrane 1, into the aqueous solution of mixture, where it reacted with dissolved oxygen in the mixture solution in the presence of the glucose oxidase to generate hydrogen peroxide. The hydrogen peroxide thus generated oxidized luminol, as catalyzed by peroxidase, to emit light. The light emission was measured with the photodetector 6 to estimate the amount of glucose that permeated through the membrane 1.

Example 2

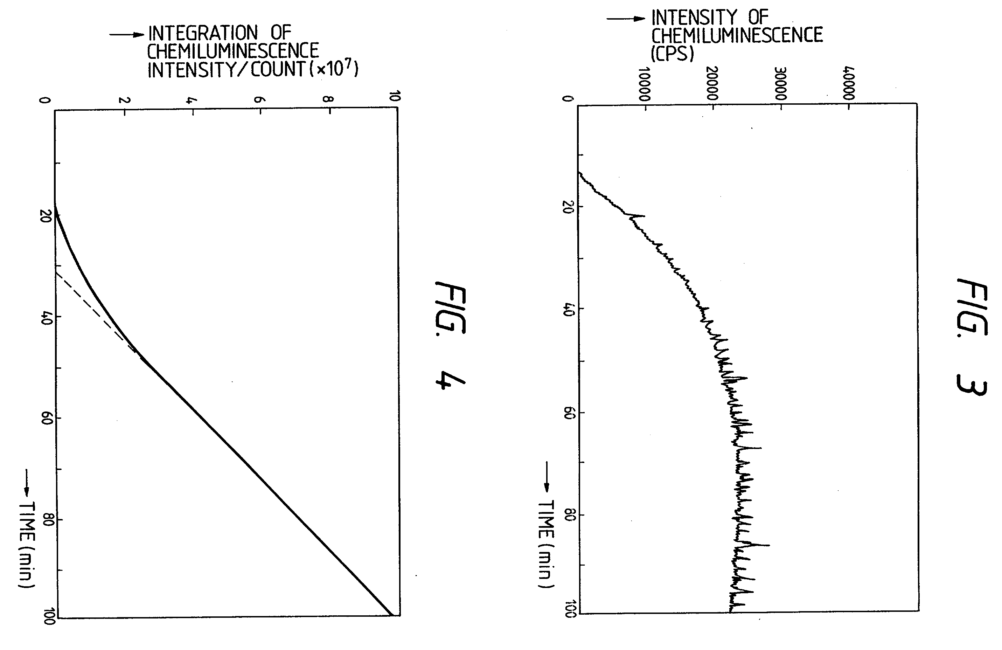

Fig. 2 is a sketch of an apparatus for measuring the permeability of the skin of a microcapsule by a method according to the present invention. Numeral 8 represents the microcapsule under test, and the same numerals as those used in Fig. 1 are identical to those elements as shown in Fig. 2.

An aqueous solution of the first substance, which was the same as that used in Example 1, was put into the cell 2, and the microcapsules confining an aqueous solution of the same mixture as that used in example 1 were submerged in the aqueous solution of the first substance. The cell 2 was placed carefully, in the dark box 7. After placing the photodetector 6 above the cell 2, the dark box was totally isolated from outside light.

As the glucose in the aqueous solution of the first solution permeated through the walls of the microcapsules, the emission of faint light was measured with the photodetector 6.

## Example 3

Fig. 3 shows the chemiluminescence intensity versus time profile obtained in Example 1 using a photomultiplier tube as the photodetector.

The relationship between chemluminescence intensity and glucose permeation rate may be expressed by:

$$I_{CL} = V \cdot \phi_C \cdot \phi_{CL} \cdot \phi_{PM} \cdot \phi_{DET} \cdot N_A \qquad (1)$$

Where $I_{CL}$ : chemiluminescence intensity (cps);

$V$: glucose permeation rate $(mol^{-1})$;
$\phi_C$: the efficiency of chemical reaction for hydrogen peroxide generation:
$\phi_{CL}$: the efficiency of luminol's luminescence;
$\phi_{PM}$: the quantum efficiency of the photomultiplier tube;
$\phi_{DET}$: the light yield of the photomultiplier tube; and
$N_A$: Avogadro's number.

Equation 1 shows that the intensity of chemiluminescence is proportional to the permeation rate of a permeant. Assuming $\phi_C = 0.01$, $\phi_{CL} = 10^{-4}$, $\phi_{PM} = 0.1$ and $\phi_{DET} = 0.01$, one can estimate from equation 1 that the permeation rate at the steady state reached after 80 minutes would be on the order of $4 \times 10^{-11}$ mol $S^{-1}$.

Fig. 4 shows the time-dependent change in the integration of the values of chemiluminescence intensity shown in Fig. 3. The result is related to the time-dependent change in the total amount of glucose that permeated through the thin membrane. Assuming that glucose is transported through the membrane by diffusion of the type governed by Fick's law, the delay time ($\theta$ in Fig. 4 required for the steady state to be reached is given by:

$$\theta = \ell^2 / 6D \qquad (2)$$

where $\ell$: membrane thickness
D: the diffusion coefficient of permeant (glucose) within the membrane (for detailed discussion, see J. Crank, The Mathematics of Diffusion, Oxford University Press, p. 51, 1975). Substituting 32 min and 35 μm into

$\theta$ and $\ell$, respectrively, $D = 1 \times 10^{-9}$ cm$^2$s$^{-1}$ for the case shown in Fig. 4. This value is considerably smaller than the diffusion coefficient of a low-molecular weight substance in the solution ($\simeq 10^{-5}$cm$^2$s$^{-1}$). This is probably due to the long pathway of glucose diffusion through the membrane and to the interaction of glucose molecules with the membrane of other substances.

## Example 4

## Permeation Test on Ferric ion

Ferric oxalate was used as the first substance that catalyzes chemiluminescence, and luminol and aqueous hydrogen peroxide were used as chemiluminescence substances. The chemiluminescent substances were mixed, fixed in gelatin and overlaid with a thin membrane to be tested. A solution of the ferric oxalate was poured above the membrane. Before the ferric ions permeated through the membrane, chemiluminescence, although weak, was already observed by a photon counting method. It was also observed that the intensity of chemiluminescence increased greatly as the ferric ions permeated through the membrane.

## Example 5

## Permeation Test On Anthracene

Anthracene was used as a fluorescent substance, and bis (2,4-dinitrophenyl) oxalate and hydrogen peroxide were used as a plurality of reactive substances that would generate an excited intermediate capable of transferring energy to the fluorescent substance. The excited intermediate in this case was therefore dioxetane dione. In order to ensure slow progress of the reaction, a mixed solvent system composed of dimethyl sulfoxide, water and glycerin was used. Increasing the rate of glycerin will enable the excited intermemdiate to be generated at a lower rate. Gelatin or agar may be used as a fixing agent as required.

Chemical luminescence from anthracene was observed as anthracene permeated through the thin membrane under test.

## Claims

1. A method of evaluating the permeability of a thin membrane comprising the steps of:

    preparing a first solution comprising a first substance;

    preparing a second solution comprising a mixture of a chemiluminescent substance and a second substance that reacts with said first substance;

juxtaposing said first and second solutions across said membrane to be evaluated;

allowing said first substance to diffuse and permeate across said membrane wherein said first substance will react with said second substance to form a third substance and said third substance will react with said chemiluminescent substance; and

determining the permeation rate of said first substance by measuring the emission of light produced by the chemiluminescent reaction by a photodetector.

2. The method of claim 1, wherein said third substance comprises hydrogen peroxide.

3. The method of claim 2, wherein reaction of said first substance and said second substance is catalyzed by a first catalyst, and
the combination of said first substance and said first catalyst is selected from any one of the following combinations;

cholesterol/cholesterol oxidase;
cholesterol ester/cholesterol ester hydrase or cholesterol ester oxidase;
neutral fat/lipase and glycerol oxidase
phospholipid/phcspholipase D and choline oxidase;
free fatty acid/acyl-CoA synthetase and acyl-CoA oxidase;
urea/urease, glutamate dehydrogenase and glutamate oxidase;
ammonia/glutamate dehydrogenase and glutamate oxidase;
uric acid/uricase;
creatine/creatininase, creatinase and sarcosine oxidase;
lactic acid/lactate oxidase;
pyruvic acid/pyruvate oxidase;
amino acid/amino acid oxidase; and
inorganic phosphorus/pyruvate oxidase.

4. The method of claim 2, wherein said chemiluminescent substance comprises any one of the substances which react with hydrogen peroxide to emit chemiluminescent light.

5. The method of claim 4, wherein said chemiluminescent substance comprises a substance selected from the group consisting of luminol, luciferin (lucigenin) and lophine.

6. The method of claim 2, wherein reaction of said third substance and said chemiluminescent substance is catalyzed by a second catalyst comprising peroxidase.

7. The method of claim 1, wherein said first substance comprises Adenosin triphosphate (ATP).

8. The method of claim 7, wherein said first substance is creatinic acid, or phosphoenol pyruvate kinase, and said second substance is creatine kinase/adenosine diphosphate (ADP), or pyruvate kinase/ADP.

9. The method of claim 8, wherein said chemiluminescent substance comprises luciferine.

10. A method of evaluating the permeability of a thin membrane comprising the steps of:

preparing a first solution comprising a first substance for catalyzing a chemiluminescent reaction;

preparing a second solution comprising a chemiluminescent substance for producing chemiluminescence in the presence of said first substance;

juxtaposing said first and second solutions across said membrane to be evaluated;

allowing said first substance to diffuse and permeate across said membrane wherein said first substance will catalyze said second substance resulting in a chemiluminescent reaction; and

determining the permeation rate of said first substance by measuring the emission of light produced by the chemiluminescent reaction by a photodetector.

11. The method of claim 10, wherein said second solution comprises a solution of aqueous hydrogen peroxide mixed with luminol, luciferin, lophine, 1,10-phenanthroline, or siloxene.

12. The method of claim 10, wherein said first substance comprises a metal ion selected from the group consisting of $Fe^{2+}$, $Cr^{3+}$, $Co^{2+}$, $Cu^{2+}$, $Mn^{2+}$, $Cd^{2+}$, or $Zn^{2+}$.

13. A method of evaluating the permeability of a thin membrane comprising the steps of:

preparing a first solution comprising a fluorescent substance;

preparing a second solution comprising a plurality of reactive substances that produce an excited intermediate which is capable of transferring energy to said fluorescent substance;

juxtaposing said first and second solutions across said membrane to be evaluated;

allowing said first substance to diffuse and permeate across said membrane; and

determining the permeation rate of said first substance by measuring the emission of light produced by the chemiluminescent reaction by a photodetector.

14. The method of claim 13, wherein said fluorescent substance comprises a substance selected from the group consisting of anthracene, pyrene, rhodamine B, uric acid, catecholamine, folic acid, and thyroxine quinones.

15. The method of claim 13, wherein said excited intermediate capable of transferring energy to said fluorescent substance is a mixture comprising hydrogen peroxide and an oxalic diester.

16. The method of claim 15, wherein said oxalic diester is bis (2,4-dinitrophenyl) oxalate or bis (2,4,6-trichlorophenyl) oxalate.

17. The method of any of claims 1, 10 or 13, wherein said photodetector is a photomultiplier tube, an image intensifier, an infrared sensor, a one-dimensional sensor, or a two-dimensional sensor.

18. The method according to any of claims 1, 10 or 13, wherein said thin membrane is the wall of a microcapsule, packaging film, reverse osmotic membrane, dialysis membrane, ultrafiltration membrane, or microfiltration membrane.

**Patentansprüche**

1. Verfahren zur Untersuchung der Permeabilität einer dünnen Membran, das die folgenden Schritte aufweist:

Herstellung einer ersten Lösung, die eine erste Substanz enthält;

Herstellung einer zweiten Lösung, die eine Mischung einer chemilumineszierenden Substanz und einer zweiten Substanz enthält, die mit der ersten Substanz reagiert;

Nebeneinanderstellen der ersten und zweiten Lösungen über die Membran, die untersucht werden soll;

woraufhin man der ersten Substanz ermöglicht, über die Membran zu diffundieren und zu permeiren, worin die erste Substanz mit der zweiten Substanz zur Bildung einer dritten Substanz reagieren wird und wobei die dritte Substanz mit der chemilumineszierenden Substanz reagieren wird; und

Bestimmung der Permeationsrate der ersten Substanz durch Messung der Lichtemission, die durch die Chemilumineszenzreaktion erzeugt wird, durch einen Photodetektor.

2. Verfahren gemäß Anspruch 1, wobei die dritte Substanz Wasserstoffperoxid enthält.

3. Verfahren gemäß Anspruch 2, wobei die Reaktion der ersten Substanz mit der zweiten Substanz durch einen ersten Katalysator katalysiert wird und wobei die Kombination der ersten Substanz und des ersten Katalysators aus einer der folgenden Kombinationen ausgewählt ist:

Cholesterin/Cholesterinoxidase;
Cholesterinester/Cholesterinesterhydrase oder Cholesterinesteroxidase;
neutrales Fett/Lipase und Glycerinoxidase;
Phospholipid/Phospholipase D und Cholinoxidase;
freie Fettsäure/Acyl-CoA-Synthetase und Acyl-CoA-Oxidase;
Harnstoff/Urease, Glutamatdehydrogenase und Glutamatoxidase;
Ammoniak/Glutamatdehydrogenase und Glutamatoxidase;
Harnsäure/Uricase;
Kreatin/Kreatininase, Kreatinase und Sarcosinoxidase;
Milchsäure/Lactatoxidase;
Brenztraubensäure/Pyruvatoxidase;
Aminosäure/Aminosäureoxidase; und
anorganischer Phosphor/Pyruvatoxidase.

4. Verfahren gemäß Anspruch 2, wobei die chemilumineszierende Substanz eine der Substanzen enthält, die mit Wasserstoffperoxid reagieren, um chemilumineszierendes Licht zu emittieren.

5. Verfahren gemäß Anspruch 4, wobei die chemilumineszierende Substanz eine Substanz enthält, die ausgewählt ist aus der Gruppe, bestehend aus Luminol, Luciferin (Lucigenin) und Lophin.

6. Verfahren gemäß Anspruch 2, wobei die Reaktion der dritten Substanz und der chemilumineszierenden Substanz durch einen zweiten Katalysator katalysiert wird, der Peroxidase enthält.

**7.** Verfahren gemäß Anspruch 1, wobei die erste Substanz Adenosintriphosphat (ATP) enthält.

**8.** Verfahren gemäß Anspruch 7, wobei die erste Substanz Kreatinsäure oder Phosphoenolpyruvat-Kinase ist und wobei die zweite Substanz Kreatinkinase/Adenosindiphosphat (ADP) oder Pyruvatkinase/ADP ist.

**9.** Verfahren gemäß Anspruch 8, wobei die chemilumineszierende Substanz Luciferin enthält.

**10.** Verfahren zur Untersuchung der Permeabilität einer dünnen Membran, das die folgenden Schritte aufweist.

Herstellung einer ersten Lösung, die eine erste Substanz zur Katalyse einer Chemilumineszenzreaktion enthält;

Herstellung einer zweiten Lösung, die eine chemilumineszierende Substanz zur Bildung von Chemilumineszenz in Gegenwart der ersten Substanz enthält;

Nebeneinanderstellen der ersten und zweiten Lösungen über die zu untersuchende Membran; woraufhin man

der ersten Substanz ermöglicht, über die Membran zu diffundieren und zu permeieren, worin die erste Substanz die zweite Substanz katalysieren wird, was zu einer Chemilumineszenzreaktion führt; und

Bestimmung der Permeationsrate der ersten Substanz durch Messung der Emission von Licht, verursacht durch die Chemilumineszenzreaktion, durch einen Photodetektor.

**11.** Verfahren gemäß Anspruch 10, wobei die zweite Lösung eine Lösung von wäßrigem Wasserstoffperoxid enthält, gemischt mit Luminol, Luciferin, Lophin, 1,10-Phenanthrolin oder Siloxen.

**12.** Verfahren gemäß Anspruch 10, wobei die erste Substanz ein Metallion enthält, ausgewählt aus der Gruppe, bestehend aus $Fe^{2+}$, $Cr^{3+}$, $Co^{2+}$, $Cu^{2+}$, $Mn^{2+}$, $Cd^{2+}$ oder $Zn^{2+}$.

**13.** Verfahren zur Bestimmung der Permeabilität einer dünnen Membran, das die folgenden Schritte aufweist:

Herstellung einer ersten Lösung, die eine fluoreszierende Substanz enthält;

Herstellung einer zweiten Lösung, die eine Vielzahl von reaktiven Substanzen enthält, die ein angeregtes Intermediat erzeugen, das fähig ist, Energie auf die fluoreszierende Substanz zu übertragen;

Nebeneinanderstellen der ersten und zweiten Lösungen über die zu untersuchende Membran; woraufhin man

der ersten Substanz ermöglicht, über die Membran zu diffundieren und zu permeieren; und

Bestimmung der Permeationsrate der ersten Substanz durch Messung der Lichtemission, die durch die Chemilumineszenzreaktion ausgelöst wird, durch einen Photodetektor.

**14.** Verfahren gemäß Anspruch 13, wobei die fluoreszierende Substanz eine Substanz enthält, ausgewählt aus der Gruppe, bestehend aus Anthracen, Pyren, Rhodamin B, Harnsäure, Katecholamin, Folsäure und Thyroxinchinonen.

**15.** Verfahren gemäß Anspruch 13, wobei das angeregte Intermediat, das fähig ist zur Übertragung von Energie auf die fluoreszierende Substanz, eine Mischung ist, die Wasserstoffperoxid und einen Oxalsäurediester aufweist.

**16.** Verfahren gemäß Anspruch 15, wobei der Oxalsäurediester bis(2,4-dinitrophenyl)oxalat oder bis(2,4,6-Trichlorphenyl)oxalat ist.

**17.** Verfahren gemäß einem oder mehreren der Ansprüche 1, 10 oder 13, wobei der Photodetektor ein Photomultiplier, ein Bildverstärker, ein Infrarotsensor, ein eindimensionaler Sensor oder ein zweidimensionaler Sensor ist.

**18.** Verfahren gemäß einem oder mehreren der Ansprüche 1, 10 oder 13, wobei die dünne Membran die Wand einer Mikrokapsel, eine Verpackungsfolie, eine umkehrosmotische Membran, eine Dialysemembran, eine Ultrafiltrationsmembran oder eine Mikrofiltrationsmembran ist.

**Revendications**

**1.** Procédé d'évaluation de la perméabilité d'une mince membrane, comprenant les étapes consistant à :

- préparer une première solution comprenant une première substance;
- préparer une seconde solution comprenant un mélange d'une substance chimioluminescente et d'une seconde substance qui réagit avec ladite première substance;

- juxtaposer lesdites première et seconde solutions de part et d'autre de cette membrane à évaluer;
- laisser ladite première substance diffuser et passer par perméation à travers ladite membrane, de sorte que ladite première substance va réagir avec ladite seconde substance pour former une troisième substance, et ladite troisième substance va réagir avec ladite substance chimioluminescente; et
- déterminer la vitesse de perméation de ladite première substance en mesurant, à l'aide d'un photodétecteur, l'émission de lumière produite par la réaction chimioluminescente.

2. Procédé selon la revendication 1, dans lequel ladite troisième substance comprend du peroxyde d'hydrogène.

3. Procédé selon la revendication 2, dans lequel la réaction de ladite première substance et de ladite seconde substance est catalysée par un premier catalyseur, et

la combinaison de ladite première substance et dudit premier catalyseur est choisie parmi l'une quelconque des combinaisons suivantes :

- cholestérol/cholestérol oxydase;
- ester de cholestérol/(ester de cholestérol) hydrase ou (ester de cholestérol) oxydase;
- graisse neutre/lipase et glycérol oxydase,
- phospholipide/phospholipase D et choline oxydase;
- acide gras libre/acyl-CoA synthétase et acyl-CoA oxydase;
- urée/uréase, glutamate déshydrogénase et glutamate oxydase;
- ammoniaque/glutamate déshydrogénase et glutamate oxydase;
- acide urique/uricase;
- créatine/créatininase, créatinase et sarcosine oxydase;
- acide lactique/lactate oxydase;
- acide pyruvique/pyruvate oxydase;
- amino acide/amino acide oxydase; et
- phosphore minéral/pyruvate oxydase.

4. Procédé selon la revendication 2, dans lequel ladite substance chimioluminescente comprend n'importe laquelle des substances réagissant avec du peroxyde d'hydrogène pour émettre de la lumière de chimioluminescence.

5. Procédé selon la revendication 4, dans lequel ladite substance chimioluminescente comprend une substance choisie dans l'ensemble consistant en le luminol, la luciférine (lucigénine) et la lophine.

6. Procédé selon la revendication 2, dans lequel la réaction de ladite troisième substance et de ladite substance chimioluminescente est catalysée par un second catalyseur comprenant de la peroxydase.

7. Procédé selon la revendication 1, dans lequel ladite première substance comprend de l'adénosine triphosphate (ATP).

8. Procédé selon la revendication 7, dans lequel ladite première substance est l'acide créatinique ou de la phosphoénol pyruvate kinase, et ladite seconde substance est de la créatine kinase/adénosine diphosphate (ADP), ou de la pyruvate kinase/ADP.

9. Procédé selon la revendication 8, dans lequel ladite substance chimioluminescente comprend de la luciférine.

10. Procédé d'évaluation de la perméabilité d'une membrane mince, comprenant les étapes consistant à :

- préparer une première solution comprenant une première substance pour catalyser une réaction de chimioluminescence;
- préparer une seconde solution comprenant une substance chimioluminescente pour la production d'une chimioluminescence en présence de ladite première substance;
- juxtaposer lesdites première et seconde solutions de part et d'autre de ladite membrane à évaluer;
- laisser ladite première substance diffuser et passer par perméation à travers ladite membrane, de sorte que ladite première substance va catalyser ladite seconde substance, ce qui provoque une réaction de chimioluminescence; et
- déterminer la vitesse de perméation de ladite première substance en mesurant, à l'aide d'un photodétecteur, l'émission de lumière produite par la réaction de chimioluminescence.

11. Procédé selon la revendication 10, dans lequel ladite seconde solution comprend une solution de peroxyde d'hydrogène aqueux mélangé à du luminol, de la luciférine, de la lophine, de la 1,10-phénanthroline ou du siloxène.

12. Procédé selon la revendication 10, dans lequel ladite première substance comprend un ion de métal choisi dans l'ensemble consistant en $Fe^{2+}$, $Cr^{3+}$, $Co^{2+}$, $Cu^{2+}$, $Mn^{2+}$, $Cd^{2+}$, ou $Zn^{2+}$.

13. Procédé d'évaluation de la perméabilité d'une membrane mince, comprenant les étapes consistant à :

- préparer une première solution comprenant une substance fluorescente;
- préparer une seconde solution comprenant plusieurs substances réactives qui produisent un intermédiaire excité, lequel est capable de transférer de l'énergie à ladite substance fluorescente;
- juxtaposer lesdites première et seconde solutions de part et d'autre de ladite membrane à évaluer;
- laisser ladite première substance diffuser et passer par perméation à travers ladite membrane; et
- déterminer la vitesse de perméation de ladite première substance en mesurant, à l'aide d'un photodétecteur, l'émission de lumière produite par la réaction de chimioluminescence.

14. Procédé selon la revendication 13, dans lequel ladite substance fluorescente comprend une substance choisie dans l'ensemble consistant en l'anthracène, le pyrène, la rhodamine B, l'acide urique, la cathécolamine, l'acide folique et des thyroxine quinones.

15. Procédé selon la revendication 13, dans lequel ledit intermédiaire excité, capable de transférer de l'énergie à ladite substance fluorescente, est -un mélange comprenant du peroxyde d'hydrogène et un diester de l'acide oxalique.

16. Procédé selon la revendication 15, dans lequel ledit diester d'acide oxalique est l'oxalate de bis (2,4-dinitrophényle) ou l'oxalate de bis (2,4,6-trichlorophényle).

17. Procédé selon l'une quelconque des revendications 1, 10 ou 13, dans lequel ledit photodétecteur est un tube photomultiplicateur, un intensificateur d'image, un détecteur d'infrarouge, un détecteur monodimensionnel ou un détecteur bis-dimensionnel.

18. Procédé selon l'une quelconque des revendications 1, 10 ou 13, dans lequel ladite membrane mince est la paroi d'une microcapsule, un film d'emballage, une membrane pour osmose inverse, une membrane pour dialyse, une membrane pour ultrafiltration ou une membrane pour microfiltration.

## FIG. 1

## FIG. 2

## FIG. 3

## FIG. 4